# EUROPÄISCHE PATENTANMELDUNG

(11) **EP 1 750 042 A1**
(43) Veröffentlichungstag der Anmeldung: **07.02.2007**
(21) Anmeldenummer: 06015647.8
(22) Anmeldetag: 27.07.2006
(51) Int. Cl.: F16J 15/06, F16J 15/32, F02F 11/00, F16B 5/02

(54) **Anordnung zum Verschliessen eines Gehäuses**

(30) Priorität: 05.08.2005 EP 05017038
(71) Anmelder: AB SKF, S-415 50 Göteborg (SE)
(72) Erfinder: Kurth, Jürgen, 51519 Odenthal (DE); Kamps, Thomas, 51515 Kürten (DE)
(74) Vertreter: Kohl, Thomas

(57) **Zusammenfassung**

Eine Anordnung zum Verschließen eines Gehäuses (8) mit einem Deckel (1) beinhaltet folgende Merkmale:
- Der Deckel (1) umfasst ein Zentralloch zum Aufnehmen eines Dichtrings (2) für eine im Einbauzustand durch den Dichtring sich erstreckende Welle,
- der Deckel (1) umfasst wenigstens eine erste (6) und eine zweite (6') hohlzylinderartige Ausformung, die gegenüber den sie unmittelbar umgebenden Bereichen des Gehäuseverschlussdeckels in etwa in Richtung der Welle vorstehen, und die zum Einsetzen in entsprechende Höhlungen (7) des Gehäuses vorgesehen sind,
- die Mantelflächen der ersten Ausformung (6) und deren zugehörige Höhlung (7) sind für ein im wesentliches spielfreies bzw. passgenaues Aneinanderanliegen ausgebildet, und
- die zweite Ausformung (6') und deren zugehörige Höhlung (7) sind derart ausgebildet, dass die Ausformung in Richtung einer, die beiden Mittelpunkte beider Ausformungen (6,6') verbindenden Linie (19) innerhalb der Höhlung im wesentlichen frei positionierbar ist und dass die zweite Ausformung in Richtung eines zur Linie (19) in etwa senkrechten Durchmessers der Höhlung an wenigstens einem Punkt (12) der Mantelfläche der Höhlung zum Anliegen vorgesehen ist.

## Beschreibung

Die Erfindung betrifft eine Anordnung zum Verschließen eines Gehäuses mit einem Deckel.

Gehäuseverschlussdeckel mit einer Wellendurchführung, speziell für eine hintere Kurbelwellenabdichtung unterliegen stets der Bauraumrestriktion. Gerade die Bauhöhe des Gehäuseverschlussdeckels einschließlich seiner Befestigungselemente ist von entscheidender Bedeutung, kann aber im wesentlichen nur über die Dicke eines Flanschabschnitts des Gehäuseverschlussdeckels unter den Befestigungselementen beeinflusst werden. Aus diesem Grund haben sich auf dem Markt Gehäuseverschlussdeckel aus gezogenem Blech etabliert.

Gehäuseverschlussdeckel für Kurbelwellendurchdringungen an Verbrennungsmotoren können nach dem Stand der Technik über zwei symmetrisch aus einem Blechträgerelement des Gehäuseverschlussdeckels herausgezogene, ausgestülpte Zylinder bezüglich Kurbelwelle und dem Motorblock zentriert werden, wobei derartige Ausstülpungen eine Schraubendurchführung und Zentrierfunktion kombinieren können. Derartige zentrierende Ausstülpungen, beispielsweise bekannt aus der EP 0 503 143 B1, müssen so dimensioniert werden, dass sie bei allen Toleranzgrenzlagen montierbar sind. Dies erfordert einen entsprechenden nominalen Freigang bzw. ein nominales Spiel zwischen den Ausstülpungen des Gehäuseverschlussdeckels und den korrespondierenden Bohrungen des Motorblockes. Aus der EP 0 503 143 B1 ist weiterhin eine Zentrierung beschrieben, bei der zur Vereinfachung der Montage an mindestens zwei Schraubendurchgangsführungen ausgestülpte Zylinder vorgesehen sind, die am Umfang Abweichungen von der Kreisform aufweisen, und so punktweise in den Bohrungen des Motorblocks zur Anlage kommen.

Eine Aufgabe der Erfindung ist es, eine verbesserte Anordnung zum Verschließen eines Gehäuses mit einem Deckel zu schaffen, so dass bei einfacher und damit kostengünstiger Herstellbarkeit der Deckel bei hoher Montagefreundlichkeit mit geringer Positionstoleranz am Gehäuse befestigbar ist.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet eine Anordnung zum Verschließen eines Gehäuses mit einem Deckel folgende Merkmale:
- Der Deckel umfasst ein Zentralloch zum Aufnehmen eines Dichtrings für eine im Einbauzustand durch den Dichtring sich erstreckende Welle,
- der Deckel umfasst wenigstens eine erste und eine zweite hohlzylinderartige Ausformung, die gegenüber den sie unmittelbar umgebenden Bereichen des Gehäuseverschlussdeckels in etwa in Richtung der Welle vorstehen, und die zum Einsetzen in entsprechende Höhlungen des Gehäuses vorgesehen sind,
- die Mantelflächen der ersten Ausformung und deren zugehörige Höhlung sind für ein im wesentliches spielfreies bzw. passgenaues Aneinanderanliegen ausgebildet, und
- die zweite Ausformung und deren zugehörige Höhlung sind derart ausgebildet, dass die Ausformung in Richtung einer, die beiden Mittelpunkte beider Ausformungen verbindenden Linie innerhalb der Höhlung im wesentlichen frei positionierbar ist und dass die zweite Ausformung in Richtung eines zur Linie in etwa senkrechten Durchmessers der Höhlung an wenigstens einem Punkt der Mantelfläche der Höhlung zum Anliegen vorgesehen ist.

Dabei wird durch die gestalterische Trennung der beiden Ausformungs-Höhlungs-Paare in ein passgenaues Paar, beispielsweise in der Ausführung als eine Kreis-/Kreis-Zylinderpaarung und in ein sich für ein punktuelles Berühren vorgesehenes Ausformungs-Höhlungs-Paar, beispielsweise in der Ausführung als eine Kreis-/Ellipsen-Zylinderpaarung bei maximaler Freiheit in Achsrichtung der Ausformungen eine minimale Positionstoleranz zwischen Deckel und dem Gehäuse und damit einhergehend der Welle erreicht. Damit wird sozusagen eine Funktionstrennung von rotatorischer und translatorischer Führung erreicht. Somit liegt der Vorteil dieser Lösung in der vereinfachten Montage bedingt durch den erhöhten Axialfreiheitsgrad. Dabei kann das ellipsenartige Element der Kreis-/Ellipsen-Zylinderpaarung beispielsweise als ein Langloch am Gehäuse, beispielsweise an einem Motorblock oder als ausgestülptes Oval an einem Blechträgerelement des Deckels ausgebildet sein.

Zur Reduzierung eines nominalen Spiels zwischen Deckel und Gehäuse ist die erste Ausformung, beispielsweise aus einem gezogenen Blech des Deckels mit minimalem Spiel zu seiner korrespondierenden Höhlung am Gehäuse, beispielsweise eine Bohrung an einem Motorblock ausgeführt und übernimmt so die punktuelle Positionierung der beiden Bauteile zueinander. Die zweite Ausformung ist im Umfang beispielsweise deutlich kleiner als die erste, wobei die Mittelpunkte der beiden Ausformungen eine gemeinsame Achse bilden. Damit der Deckel dann nicht aus der Achsposition herausgedreht werden kann, weicht die zweite, deutlich kleinere Ausformung an ihrem Umfang an zwei, sich beispielsweise an einem Durchmesser der Ausformung gegenüberliegenden Punkten in Richtung einer Normalen der gemeinsamen Achse von der Kreisform ab und tritt so mit wenigstens einem dieser Vorsprünge mit einer zweiten Höhlung am Gehäuse in Kontakt. Mit diesem Konzept können mit Vorteil Toleranzen aus den Abstandsmaßen und einer Position der Ausformungen kompensiert werden.

In einer vorteilhaften Ausgestaltung kann wenigstens eine der Ausformungen aus Kunststoff an einem Blechträger des Deckels lageorientiert angespritzt sein.

Weitere Vorteile, Merkmale und Einzelheiten der Erfindung ergeben sich aus den nachfolgend beschriebenen Ausführungsbeispielen der Erfindung anhand der Figuren. Dabei zeigen:
- Figur 1: eine Ansicht eines erfindungsgemäßen Gehäuseverschlussdeckels,
- Figur 2: eine Seitenansicht des Gehäuseverschlussdeckels der Figur 1 und eines zugehörigen Kurbelwellengehäuses,
- Figur 3: eine Ausschnittsvergrößerung gemäß Figur 2,
- Figur 4: eine Ausschnittsvergrößerung gemäß Figur 1 und
- Figur 5: eine Alternative zu den Figuren 1 bis 4.

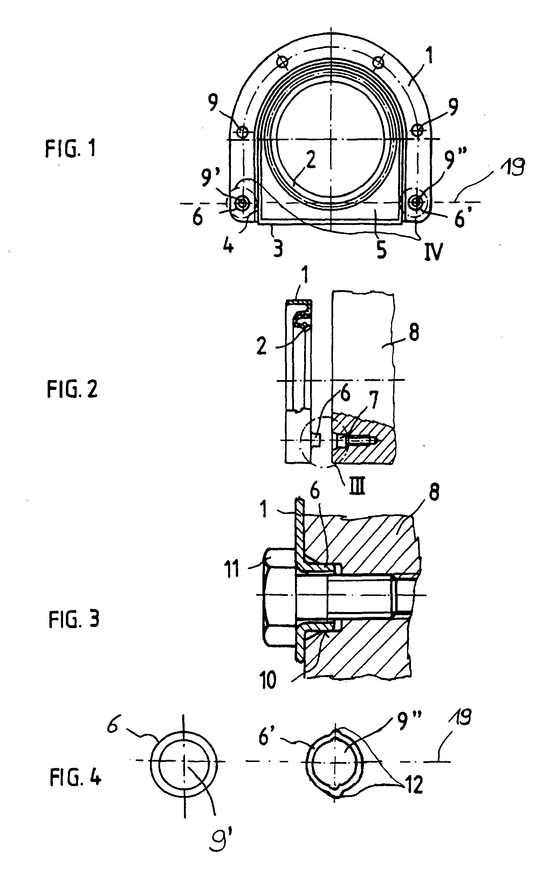

Der in der Figur 1 als ein Ausführungsbeispiel der Erfindung dargestellte Gehäuseverschlussdeckel 1 dient zur Abdichtung eines Kurbelwellengehäuses 8 eines Kraftfahrzeugmotors. Der Deckel 1 besteht dabei aus einem topfförmig gezogenen Blechkörper. Zur Abdichtung der nicht dargestellten Kurbelwelle dient ein dynamisch belasteter Lippendichtring 2 aus elastomerem Werkstoff. In anderen Ausführungsformen kann der Dichtring natürlich auch einen Dichtabschnitt aus PTFE mit einer Fluidrückförderstruktur aufweisen. Zur statischen Abdichtung sind auf der radialen Flanschfläche 5 Dichtstreifen 3 und 4 vorgesehen. Im Einbauzustand liegt der Dichtstreifen 4 am Kurbelwellengehäuse 8 an und wird mit Hilfe von durch Löcher 9, 9' und 9" steckbare Schrauben 11 verspannt. Zur lagegerechten Fixierung beziehungsweise als Zentriermittel sind erfindungsgemäß mindestens zwei der Löcher 9' und 9" mit hohlzylinderartigen Ausformungen 6 und 6' ausgebildet, wie dies auch die Figur 2 zeigt.

Die Ausformungen 6 und 6' greifen beim Einbau des Gehäuseverschlussdeckels 1 in Höhlungen 7 des Kurbelwellengehäuses 8, wobei die Höhlungen 7 gleichzeitig als Aufnahmebohrungen der durch die Löcher 9' und 9" steckbare Schrauben 11 dienen, was insbesondere aus den Figuren 2 und 3 hervorgeht. Auf diese Weise kann mit Vorteil auf Passstifte verzichtet werden.

Die Ausformung 6 und die zugehörige Höhlung 7 sind dabei durch einen Kreiszylinderaußenmantelabschnitt der Ausformung 6 und einer entsprechenden Begrenzung der Höhlung 7 passgenau zueinander ausgebildet. Dahingegen sind die Ausformung 6' und ihre zugehörige Höhlung 7 derart ausgebildet, dass die Ausformung 6' in einer Richtung einer die beiden Mittelpunkte beider Ausformungen 6 und 6' verbindenden Linie 19 innerhalb der besagten Höhlung 7 im wesentlichen frei positionierbar ist und dass die Ausformung 6' in Richtung eines zur Linie 19 in etwa senkrechten Durchmessers der Höhlung 7 an wenigstens einem Punkt an der Mantelfläche der Höhlung 7 anliegt. Dazu ist die Ausformung 6' hohlkreiszylinderartig ausgebildet und weist an zwei sich in Umfangsrichtung der Ausformung 6' gegenüberliegenden Stellen jeweils eine Ausbauchung 12 auf, deren Scheitel in etwa entlang besagten Durchmessers liegen und von denen wenigstens eine in der Höhlung 7 zur Anlage vorgesehen ist. Da im beschriebenen Ausführungsbeispiel alle Höhlungen 7 gleichartig mit gleichen Durchmessern ausgebildet sind, weist die Ausformung 6' gegenüber der Ausformung 6 außerhalb des Bereichs ihrer Ausbauchungen 12 einen deutlich kleineren Außenmanteldurchmesser als die Ausformung 6 auf. Dabei werden durch die vorausgehend beschriebene Ausbildung der Ausformungen 6 und 6' im Zusammenspiel mit entsprechenden Höhlungen 7 die eingangs genannten Vorteile erzielt.

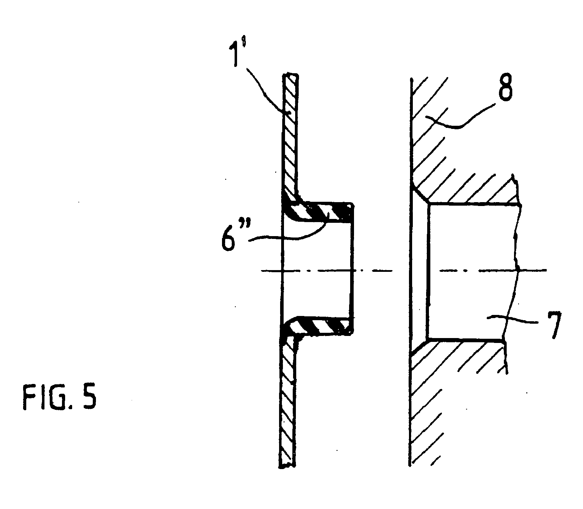

Die Figur 5 zeigt als ein weiteres Ausführungsbeispiel eine Alternative zu den Figuren 1 bis 4, bei dem eine Ausformung 6" nicht wie die Ausformungen 6 und 6' bei den Figuren 1 bis 4 aus dem Blechkörper des Deckels 1 gezogen ist, sondern der Deckel 1' lediglich Öffnungen aufweist, an denen hohlzylinderartige Ausformungen 6" aus Kunststoff angespritzt sind. Mit besagter Kunststoffspritztechnik ist es dabei in vergleichsweise einfacher und unaufwendiger Weise möglich, unterschiedlichste Ausbildungen von Ausformungen zu realisieren.

## Patentansprüche

1. Anordnung zum Verschließen eines Gehäuses mit einem Deckel, beinhaltend folgende Merkmale:
- Der Deckel umfasst ein Zentralloch zum Aufnehmen eines Dichtrings für eine im Einbauzustand durch den Dichtring sich erstreckende Welle,
- der Deckel umfasst wenigstens eine erste und eine zweite hohlzylinderartige Ausformung, die gegenüber den sie unmittelbar umgebenden Bereichen des Gehäuseverschlussdeckels in etwa in Richtung der Welle vorstehen, und die zum Einsetzen in entsprechende Höhlungen des Gehäuses vorgesehen sind,
- die Mantelflächen der ersten Ausformung und deren zugehörige Höhlung sind für ein im wesentliches spielfreies bzw. passgenaues Aneinanderanliegen ausgebildet, und
- die zweite Ausformung und deren zugehörige Höhlung sind derart ausgebildet, dass die Ausformung in Richtung einer, die beiden Mittelpunkte beider Ausformungen verbindenden Linie innerhalb der Höhlung im wesentlichen frei positionierbar ist und dass die zweite Ausformung in Richtung eines zur Linie in etwa senkrechten Durchmessers der Höhlung an wenigstens einem Punkt der Mantelfläche der Höhlung zum Anliegen vorgesehen ist.

2. Anordnung nach Anspruch 1, wobei der Außenmantel der zweiten Höhlung kreiszylinderartig und die zugehörige Höhlung in Richtung besagter Linie langlochartig ausgebildet sind.

3. Anordnung nach Anspruch 1, wobei die Höhlung für die zweite Ausformung mit einer kreiszylinderartigen Mantelfläche ausgebildet ist.

4. Anordnung nach Anspruch 3, wobei der Außenmantel der zweiten Ausformung in wenigstens einem Abschnitt mit einem ellipsenförmigen Querschnitt ausgebildet ist, wobei die kürzere der Ellipsenhauptachsen etwa in Richtung besagter Linie orientiert ist.

5. Anordnung nach Anspruch 3, wobei der Außenmantel der zweiten Ausformung kreiszylinderartig mit kleinerem Durchmesser als die Höhlung und an zwei sich in Umfangsrichtung der Ausformung gegenüberliegenden Stellen mit jeweils einer Ausbauchung ausgebildet ist, deren Scheitel in etwa entlang besagten senkrechten Durchmessers der Höhlung liegen.

6. Anordnung nach Anspruch 5, wobei wenigstens eine der Ausbauchungen sich wenigstens in einem Abschnitt der Ausformung in Richtung der Hauptachse der Ausformung erstreckt.

7. Anordnung nach einem der Ansprüche 1 bis 6, wobei die Mantelflächen der ersten Ausformung und deren zugehörige Höhlung wenigstens in einem axialen Abschnitt entsprechend einem Kreiszylinder ausgebildet sind.

8. Anordnung nach einem der Ansprüche 1 bis 7, wobei wenigstens die die Ausformungen umgebenden Bereiche aus einem Blech hergestellt sind.

9. Anordnung nach einem der Ansprüche 1 bis 8, wobei wenigstens eine der Ausformungen aus einem Kunststoff hergestellt ist.

10. Anordnung nach einem der Ansprüche 1 bis 9, wobei wenigstens eine der Ausformungen durch ein Anspritzen hergestellt ist.

11. Anordnung nach einem der Ansprüche 1 bis 10, wobei wenigstens eine der Ausformungen als ein Schraubendurchgangsloch für ein Befestigen des Deckels am Gehäuse ausgebildet ist.

12. Anordnung nach einem der Ansprüche 1 bis 11, wobei die beiden Ausformungen für ein Befestigen und Zentrieren des Deckels am Gehäuse ausgebildet sind.

13. Anordnung nach einem der Ansprüche 1 bis 12, wobei die Welle eine Kurbelwelle eines Kraftfahrzeugmotors ist.
